# EUROPEAN PATENT SPECIFICATION

(11) **EP 1 961 474 B1**
(45) Date of publication and mention of the grant of the patent: **05.10.2016**
(21) Application number: 07150272.8
(22) Date of filing: 20.12.2007
(51) Int. Cl.: B01D 29/44, B01D 29/64, B01D 29/82

(54) **SEPARATOR DEVICE**
TRENNVORRICHTUNG
DISPOSITIF SÉPARATEUR

(30) Priority: 22.12.2006 IT RA20060077
(43) Date of publication of application: 27.08.2008
(73) Proprietor: BILFINGER JOHNSON WATER TECHNOLOGIES S.R.L., 41010 LIMIDI DI SOLIERA (MO) (IT)
(72) Inventor: Gavioli, Andrea, 41036, Medolla (MO) (IT); Balzani, Piero, 47020, Longiano (FC) (IT)
(74) Representative: Roncuzzi, Davide

(56) References cited:
- EP-A- 0 571 902
- CN-Y- 2 202 748
- GB-A- 996 647
- GB-A- 1 133 673
- US-A- 2 701 518
- US-A- 3 009 412
- US-A- 3 478 679
- US-A- 3 939 763
- US-A- 3 982 483
- US-A- 4 844 799
- US-B1- 6 634 508

## Description

The present invention relates to a separator for sludge. In particular, the present invention relates to a sludge separator, comprising an auger conveyor. In more detail, the present invention relates to a sludge separator, comprising an auger conveyor, provided with a filtration and separation member for filtering and separating the solid substances from the liquid ones.

### BACKGROUND TO THE INVENTION

In the field of sludge treatment the need of separating solid substances from the liquid phase is frequent. For example in sewer systems, as in the water purifiers associated thereto, particular attention must be paid to the reduction in the volume quantities of the remaining substances to be sent for final handling, both in the case of a solid portion of the same sludge to be reused, even to be sent to composting, and in the case of a solid portion of the same sludge to be placed in a landfill. Processes for more or less drastic reduction in the liquid phase contained in the sludge are in any case of great interest for obvious needs to recover the waste water and similarly for obvious needs to transport the sludge itself. In the sludge separation plants, it is well known the use of static or dynamic thickeners, which are able to achieve a reduction in the liquid phase with yields that enable to obtain sludge with dry residues in percentages varying between 8% and 12%. The use of dehydrators is also well known; they are able to achieve a reduction in the liquid phase with yields that enable to obtain sludge with dry residues in percentages varying between 15% and 30%. The thickener system and the dehydrator system are distinguished from each other both by the technology used and by the different residence times of the sludge in the systems themselves. For instance, the old patent Application US3982483 discloses a standard moisture reduction press provided with a conical Archimedean-Screw housed inside a respective cylindrical pipe, and presenting a fixed pitch and an decreasing inner diameter to compress the solid component of the treated sludge and separate such solid component from the respective liquid phase. To this purpose, the cylindrical wall of the pipe presents a plurality of narrow opens suitable to exploit a filtering function. Similarly, patent US4884799 discloses a filtration apparatus designed to reduce the size of industrial waste products that comprises both liquid and solid components. Also in this case, a conical Archimedean-screw with fixed pitch and decreasing inner diameter is provided to enhance function of compress the solid component of the treated aqueous waste.

The reduction in the liquid phase contained in the sludge can also be obtained by means of centrifugation processes, although the most economically advantageous technologies entail the use of the so-called drainage bags. The process consists of adding a flocculant such as a polyelectrolyte to the sludge, which normally contains percentages of dry substance which may vary between 1% and 5%; subsequently pouring the mixture thus obtained on a synthetic fabric usually called NWF, where the acronym stands for non-woven fabric. Through the NWF, it is possible to obtain the filtration of the solid phase and the percolation of part of the liquid phase contained in the sludge. The increase in the percentages of solid substance can be achieved, in as simple manner, by increasing the treatment times. Use of the drainage bags for the reduction of the liquid phase of the sludge is, to date, widespread in small sized civil and industrial treatment plants: although such a system is economically advantageous, it does not allow a drastic reduction in the liquid phase contained in the treated sludge. A better result in this sense can be obtained only with the costlier centrifugation plants. In the field of waste water treatment plants for small communities, for example, it would thus be useful to be able to provide plants for the reduction of the liquid phase contained in the sludge that are economically advantageous and that are able to ensure percentage yields of dry substance that are at least comparable to those obtainable with centrifugation systems, whilst entailing sharply lower costs.

It should be noted that the problem of the economically sustainable reduction of the liquid phase contained in the sludge also for small sized plants is currently unsolved, and it represents an interesting challenge for the applicant and an opportunity for decisive economic development within the specific field of use.

In view of the situation described above, it would be desirable to have available a plant for reducing the liquid phase contained in the sewage sludge which, in addition to limit and possibly to overcome the typical drawbacks of the art illustrated above, could define a new standard for this types of plants, to be used to treat, for example, the sewage of small communities, as well as of small handicraft and/or industrial enterprises.

### SUMMARY OF THE PRESENT INVENTION

The present invention relates to a sludge separator. In particular, the present invention relates to a sludge separator, comprising an auger conveyor. In more detail, the present invention relates to a sludge separator comprising an auger conveyor, provided with a filtration and separation member for filtering and separating the solid substances from the liquid ones. The object of the present invention is to provide a sludge separator, that allows the disadvantages described above to be solved, and which is suitable to satisfy a plurality of requirements that to date have still not been addressed, and therefore, suitable to represent a new and original source of economic interest and capable of modifying the current market of separation plants for separating the solid substances contained in sewage sludge.

According to the present invention, a sludge separator is provided, whose main characteristics shall be described in at least one of the following claims.

### BRIEF DESCRIPTION OF THE FIGURES

Further characteristics and advantages of the sludge separator according to the present invention will be more apparent from the description below, set forth with reference to the accompanying drawing, which illustrates a non-limiting example of embodiment, in which identical or corresponding parts are identified by the same reference numbers.

In particular:

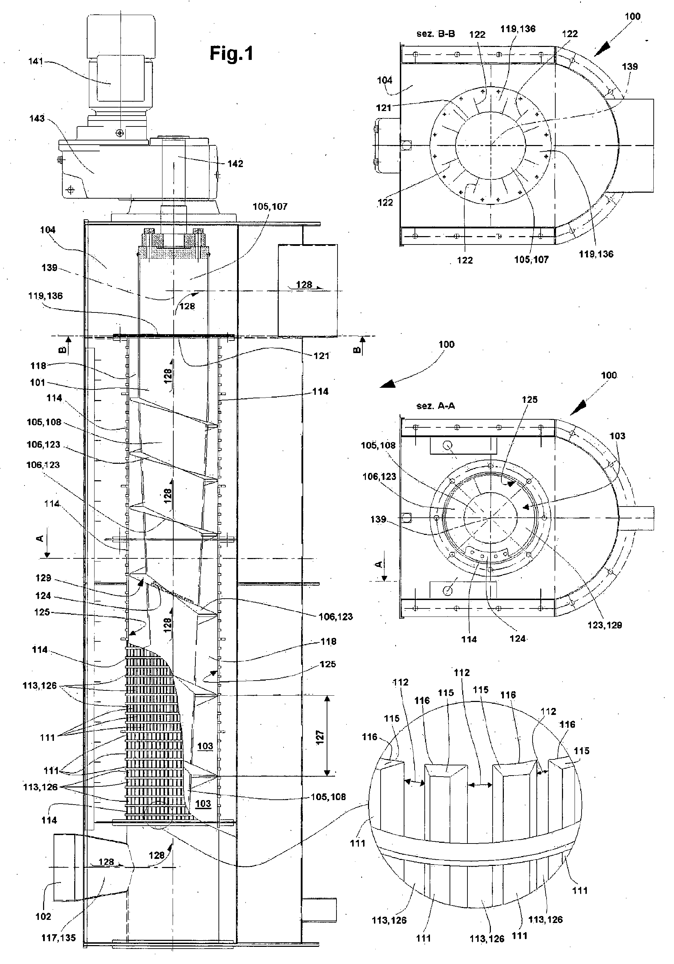

- figure 1 shows a longitudinal section and lateral elevation, partly in view and partly sectioned, of a preferred embodiment of a separator according to the present invention.

### DETAILED DESCRIPTION OF THE PRESENT INVENTION

In figure 1, number 100 indicates, in its entirety, a sludge separator, to separate the solid substances contained from the liquid phase. The separator 100 comprises a first filtering station 118 provided with an auger conveyor 101 contained within a cylindrical filtration chamber 103, and with a shaft 105, coaxial to the chamber 103, axially fixed and freely rotating. The chamber 103 is of the modular type so as to present a length which is definable at will; a helical member 106 carried coaxially by the shaft 105 is provided to convey the sludge along a given path 128, extending between an inlet conduit 102 and a discharge chamber 104 of the chamber 103. The helical member 106 presents an external diameter which approximates to the inner diameter of the chamber 103; the shaft 105 presents a first substantially conical coaxial portion 108, whose diameter increases along the path 128 to compress the sludge in an increasing manner along the same path 128, in order to increase the quantity of solid substance contained in the sludge per volume unit. The helical member 106 comprises its own helix 123 whose pitch 127 decreases along the path 128, again to increase a pressure value applied in the subsequent segments of the path 128. The chamber 103 comprises a plurality of filtering cylindrical elements 114 arranged in series; each individual element 114 comprises a plurality of bars 111 with substantially isosceles trapezoidal cross section 115 with the longitudinal face corresponding to a greater base 116 positioned on an inner surface 125, substantially cylindrical, of the chamber 103 in such a way as each pair of adjacent bars 111 delimits an opening 113 whose cross section is substantially trapezoidal and similar to a diverging conduit, so as to replicate a Venturi tube, in order to promote an acceleration of the output liquid phase from the elements 114 of the chamber 103 and to promote the mutual separation of the substances with different density contained in the sludge, once again to increase the quantity of solid substances contained per volume unit. Therefore, to each bar 111 corresponds a plurality of openings 113 shaped as a diverging conduit similar to a plurality of second filtering stations 126. The bars 111 are positioned radially and in comb fashion substantially parallel to an axis 139 of rotation of the shaft 105; the bars 111 are mutually connected in a stable manner by means of substantially circular rings positioned at the opposite side from the surface 125: the rings are arranged in a substantially orthogonal fashion to the axis 139, parallel to each other at a given distance, in order to provide stiffness to each element 114. Each bar 111 is separated from each adjacent bar 11 by a given distance 112. The chamber 103 comprises five distinct cylindrical filtering elements 114 so arranged that the given dimension 112 decreases in segments along the path 128. The described bars 111 are, in the preferred embodiment shown in the accompanying drawings, not only substantially parallel to each other, but also substantially rectilinear. On the contrary, if it is deemed appropriate, it is possible to construct the same bars 111 substantially parallel to each other but not rectilinear.

The separator 100 further comprises a third filtering station 135 positioned upstream of the helical member 106 along the path 128; this station 135 is provided with the inlet conduit 102 and comprises a portion 117 with conical shape and cross section which decreases in the same direction of the path 128 and hence towards the helical member 106, so as substantially to replicate a Venturi tube, in order to promote an acceleration of the sludge entering the chamber 103 and the mutual separation of the substances with different density, to increase the quantity of solid substances contained per volume unit.

The separator 100 further comprises a fourth filtering station 136 provided with a membrane 119 positioned downstream of the chamber 103 along the path 128, to accomplish an additional filtering of the sludge exiting the chamber 103 and to allow a further separation of the substances with different density, in order to increase the quantity of solid substances contained per volume unit. In this regard, the membrane 119 comprises a cylindrical hole 121 coaxial to the axis 139 to enable the membrane 119 to adhere to a second cylindrical portion 107 of the shaft 105; and a plurality of radial notches 122 incident in the axis 139 and elastically deformable as a result of the compression of the sludge, to enable the sludge themselves to flow through the membrane 119 through the plurality of notches 122 allowing the preferential passage to the discharge chamber 104 of the solid phase. Again with reference to the accompanying drawing, at least a first flexible gasket member 124 is associated with the helical member 106 on an upper face 129 of the respective helix 123 and such first gasket member 124 is suitable to generate a sliding contact with the substantially cylindrical internal surface 125 of the chamber 103; this first flexible gasket member 124 allows to achieve a sliding hydraulic seal to prevent the compressed sludge from travelling backwards along the path 128. At least one second member, not shown in the accompanying figures for the sake of simplicity, can be associated with the helical member 106 on a lower face of the respective helix 123; such second member, which in a preferred embodiment is a brush, is able to lap the substantially cylindrical internal surface 125 of the chamber 103, to keep it free from obstructions.

With reference to the accompanying drawing, the pitch 127 of the helical member 106 varies discretely along the path 128 to vary continuously the value of the pressure of the sludge along the path 128. On the other hand, if it is deemed appropriate, for example to simplify the construction of the auger, it is possible to construct the member 106 with continuously variable pitch, without thereby departing from the inventive concept of the present invention.

The auger conveyor 101 is provided with a rotary actuator 141, carried externally to the chamber 103 to rotate axially the helical member 106; the rotary actuator 141 is connected to the helical member 106 in a selectively releasable manner and it is mechanically connected to the helical member 106 itself at its own upper portion 142 by means of a reducer 143.

The use of the separator 100 is easily understood from the description above, and requires no further explanation.

Lastly, it is apparent that modifications and variants can be made to the separator 100, as well as to the auger conveyor 101 described and illustrated herein without however departing from the protective scope of the present invention.

From the above description, it is readily apparent that the separator 100 is a valid sludge separation system that, in addition to being particularly effective from the functional point of view, has limited cost, enables to overcome the typical drawbacks of the art and to define a new standard for sludge separators.

## Claims

1. A separator (100) of solid substances for the treatment of sewage sludge, said separator comprising an auger conveyor (101) presenting a shaft (105) that is axially fixed and freely rotating within a first filtering station (118) comprising a filtration chamber (103), cylindrical and coaxial to said shaft (105); a helical member (106) being carried coaxially by said shaft (105) in order to transport said sludge along a given path (128) extending between an inlet conduit (102) and a discharge chamber (104) of said chamber (103); said helical member (106) being dimensioned in such a way as to present a diameter that approximates to the inner diameter of said chamber (103); said shaft (105) presenting a first substantially conical coaxial portion (108) with a diameter which increases along said path (128);
wherein said chamber (103) presents a plurality of cylindrical elements (114) arranged in series and presenting respective given filtering capacity;
wherein each individual element (114) comprises a plurality of bars (111) arranged in a substantially parallel manner to an axis (139) of rotation of said shaft (105), with cross section (115) of given shape, positioned along the perimeter of said chamber (103), substantially parallel to each other in comb fashion at a mutual distance of given size (112); **characterised in that** each pair of said adjacent bars (111) delimits an opening (113) with elongated shape and substantially trapezoidal cross section, in such a way as substantially to replicate a Venturi tube, to embody a plurality of second filtering stations (126) and to promote an acceleration of the liquid phase exiting each said element (114) and hence the chamber (103) and the mutual separation of the substances with different density, in order to increase the quantity of solid substances contained per volume unit in said chamber (103).

2. A separator according to claim 1, **characterised in that** said cylindrical elements (114) are arranged in succession along said path (128) so that said given dimension (112) decreases in segments along said path (128).

3. A separator according to one of claims 1 and 2, **characterised in that** said helical member (106) comprises an its own helix (123) whose pitch (127) decreases continuously along said path (128) to compress said sludge in an increasing manner along said path (128) in order to increase the quantity of solid substances contained in said sludge per volume unit.

4. A separator according to claims 1-3, **characterised in that** the chamber (103) comprises at least five distinct cylindrical filtering elements (114).

5. A separator according to claims 1-4, **characterised in that** said bars (11) are substantially rectilinear.

6. A separator according to any one of the preceding claims, **characterised by** comprising a third filtering station (135) positioned upstream of said chamber (103) along said path (128), said station being provided with said inlet conduit (102); said inlet conduit (102) comprising a portion (117) with conical shape with decreasing cross section in the same direction as said path (128) and hence towards said helical member (106), such as substantially to replicate a Venturi tube, in order to promote an acceleration of the sludge entering said chamber (103) and the mutual separation of the substances with different density, in order to increase the quantity of solid substances contained per volume unit in said chamber (103).

7. A separator according to any one of the preceding claims, **characterised by** comprising a fourth filtering station (136) provided with a membrane (119) positioned downstream of said chamber (103) along said path (128), in order to promote a further compression of the sludge exiting said discharge chamber (104) and a further mutual separation of the substances with different density to increase the quantity of solid substances contained per volume unit.

8. A separator according to claim 7, **characterised in that** said membrane (119) comprises a cylindrical hole (121) coaxial to said axis (139) to enable said membrane (119) to adhere to a second cylindrical portion (107) of said shaft (105); and a plurality of radial notches (122) centred in said axis (139), elastically deformable as a result of the compression of said sludge against said membrane (119): through the plurality of notches (122) said sludge is thrust into said discharge chamber (104).

9. A separator according to any one of the preceding claims, **characterised in that** at least a first flexible gasket member (124) is associated with said helical member (106) on an upper face (129) of respective said helix (123); said first flexible gasket member (124) being suitable to provide sliding contact with a substantially cylindrical internal surface (125) of said chamber (103), in order to achieve a hydraulic seal and to prevent said compressed sludge from travelling backwards along said path (128).

10. A separator according to claims 1-9, **characterised in that** said cross section (115) presents substantially the shape of an isosceles trapezoid, with greater base (116) on said surface (125) of said chamber (103).

11. A separator according to any one of the preceding claims, **characterised in that** said auger conveyor (101) is provided with a rotary actuator (141), carried externally to said chamber (103) to rotate axially said helical member (106).

12. A separator according to claim 13, **characterised in that** said rotary actuator (141) is connected to said helical member (106) in a selectively releasable manner.

13. A separator according to claim 11 or 12, **characterised in that** each said rotary actuator (141) is mechanically connected to said helical member (106) at its own upper portion (142) through a reducer (143).

## Patentansprüche

1. Trennvorrichtung (100) von Feststoffen für die Klärschlammbehandlung, wobei die Trennvorrichtung eine Förderschnecke (101) umfasst, die eine Welle (105) darstellt, die axial befestigt und innerhalb einer ersten Filterstation (118), die eine Filterkammer (103), die zylindrisch und koaxial zu der Welle (105) ist, umfasst, frei drehbar ist; wobei ein spiralförmiges Element (106) koaxial von der Welle (105) getragen wird, um den Schlamm entlang eines gegebenen Weges (128), der sich zwischen einer Einlassleitung (102) und einer Entleerungskammer (104) der Kammer (103) erstreckt, zu transportieren; wobei das spiralförmige Element (106) in der Weise dimensioniert ist, dass es einen Durchmesser darstellt, der annähernd so groß wie der innere Durchmesser der Kammer (103) ist; wobei die Welle (105) einen ersten im Wesentlichen konischen koaxialen Abschnitt (108) mit einem Durchmesser darstellt, der entlang des Weges (128) ansteigt;
wobei die Kammer (103) mehrere zylindrische Elemente (114) darstellt, die in einer Reihe angeordnet sind und eine jeweils gegebene Filterkapazität darstellen;
wobei jedes einzelne Element (114) mehrere Stäbe (111) umfasst, die in einer zu einer Drehachse (139) der Welle (105) im Wesentlichen parallelen Art angeordnet sind und einen Querschnitt (115) gegebener Form aufweisen, und wobei sie entlang des Umfangs der Kammer (103) im Wesentlichen parallel zueinander in einer kammartigen Weise in einem gegenseitigen Abstand gegebener Größe (112) voneinander positioniert sind;
**dadurch gekennzeichnet, dass** jedes Paar der benachbarten Stäbe (111) eine Öffnung (113) mit einer langgestreckten Form und einem im Wesentlichen trapezförmigen Querschnitt in einer Weise begrenzt, um im Wesentlichen ein Venturirohr nachzubilden, um mehrere zweite Filterstationen (126) zu verkörpern und um eine Beschleunigung der flüssigen Phase, die jedes Element (114) und daher die Kammer (103) verlässt, und die gegenseitige Trennung der Stoffe mit unterschiedlicher Dichte zu fördern, um die Menge an Feststoffen, die pro Volumeneinheit in der Kammer (103) enthalten ist, zu erhöhen.

2. Trennvorrichtung nach Anspruch 1, **dadurch gekennzeichnet, dass** die zylindrischen Elemente (114) aufeinanderfolgend entlang des Weges (128) angeordnet sind, so dass die gegebene Dimension (112) in Segmenten entlang des Weges (128) abnimmt.

3. Trennvorrichtung nach einem der Ansprüche 1 und 2, **dadurch gekennzeichnet, dass** das spiralförmige Element (106) seine eigene Spiralform (Helix) (123) umfasst, deren Teilungsabstand (127) kontinuierlich entlang des Weges (128) abnimmt, um den Schlamm in einer wachsenden Art und Weise entlang des Weges (128) zusammenzudrücken, um die Menge an Feststoffen, die pro Volumeneinheit in dem Schlamm enthalten ist, zu erhöhen.

4. Trennvorrichtung nach einem der Ansprüche 1 bis 3, **dadurch gekennzeichnet, dass** die Kammer (103) mindestens fünf unterschiedliche zylindrische Filterelemente (114) umfasst.

5. Trennvorrichtung nach einem der Ansprüche 1 bis 4, **dadurch gekennzeichnet, dass** die Stäbe (111) im Wesentlichen geradlinig sind.

6. Trennvorrichtung nach einem der vorhergehenden Ansprüche, **dadurch gekennzeichnet, dass** sie eine dritte Filterstation (135), die stromaufwärts der Kammer (103) entlang des Weges (128) positioniert ist, umfasst, wobei die Station mit der Einlassleitung (102) versehen ist; wobei die Einlassleitung (102) einen Abschnitt (117) mit einer konischen Form und mit einem abnehmenden Querschnitt in derselben Richtung wie der Weg (128) und somit in Richtung des spiralförmigen Elements (106) umfasst, um so im Wesentlichen ein Venturirohr nachzubilden, um eine Beschleunigung des Schlammes, der in die Kammer (103) eintritt, und die gegenseitige Trennung der Stoffe mit unterschiedlicher Dichte zu fördern, um die Menge an Feststoffen, die pro Volumeneinheit in der Kammer (103) enthalten ist, zu erhöhen.

7. Trennvorrichtung nach einem der vorhergehenden Ansprüche, **dadurch gekennzeichnet, dass** sie eine vierte Filterstation (136), die mit einer Membran (119) versehen ist und stromabwärts der Kammer (103) entlang des Weges (128) positioniert ist, umfasst, um eine weitere Kompression des Schlammes, der die Entleerungskammer (104) verlässt, und eine weitere gegenseitige Trennung der Stoffe mit unterschiedlicher Dichte zu fördern, um die Menge an Feststoffen, die pro Volumeneinheit in der Kammer (103) enthalten ist, zu erhöhen.

8. Trennvorrichtung nach Anspruch 7, **dadurch gekennzeichnet, dass** die Membran (119) eine zylindrische Bohrung (121) koaxial zu der Achse (139) umfasst, um die Membran (119) in die Lage zu versetzen, an einem zweiten zylindrischen Abschnitt (107) der Welle (105) anzuhaften; und dass die Membran mehrere radiale Kerben (122) umfasst, die zentral um die Achse (139) angeordnet sind, und als ein Ergebnis der Kompression des Schlamms gegen die Membran (119) elastisch verformbar ist: durch die mehreren Kerben (122) wird der Schlamm in die Entleerungskammer (104) gepresst.

9. Trennvorrichtung nach einem der vorhergehenden Ansprüche, **dadurch gekennzeichnet, dass** mindestens ein erstes flexibles Dichtungselement (124) mit dem spiralförmigen Element (106) auf einer oberen Fläche (129) der jeweiligen Spiralform (123) verbunden ist; wobei das erste flexible Dichtungselement (124) geeignet ist, einen gleitenden Kontakt mit einer im Wesentlichen zylindrischen inneren Oberfläche (125) der Kammer (103) bereitzustellen, um eine hydraulische Abdichtung zu erreichen und um zu verhindern, dass der komprimierte Schlamm entlang des Weges (128) zurückwandert.

10. Trennvorrichtung nach einem der Ansprüche 1 bis 9, **dadurch gekennzeichnet, dass** der Querschnitt (115) im Wesentlichen die Form eines gleichschenkligen Trapezes darstellt, das eine größere Grundseite (116) auf der Oberfläche (125) der Kammer (103) darstellt.

11. Trennvorrichtung nach einem der vorhergehenden Ansprüche, **dadurch gekennzeichnet, dass** die Förderschnecke (101) mit einem Drehantrieb (141), der außerhalb der Kammer (103) getragen wird, versehen ist, um das spiralförmige Element (106) axial zu drehen.

12. Trennvorrichtung nach Anspruch 13, **dadurch gekennzeichnet, dass** der Drehantrieb (141) mit dem spiralförmigen Element (106) in einer wahlweise lösbaren Form verbunden ist.

13. Trennvorrichtung nach Anspruch 11 oder 12, **dadurch gekennzeichnet, dass** der Drehantrieb (141) mechanisch mit dem spiralförmigen Element (106) an dessen oberen Abschnitt (142) durch ein Übergangsstück (143) verbunden ist.

## Revendications

1. Séparateur (100) de substances solides pour le traitement de boues d'épuration, ledit séparateur comprenant un transporteur à vis (101) présentant un arbre (105) qui est fixé axialement et tourne librement à l'intérieur d'un premier poste de filtration (118) comprenant une chambre de filtration (103), cylindrique et coaxiale audit arbre (105) ; un élément hélicoïdal (106) qui est porté de façon coaxiale par ledit arbre (105) afin de transporter lesdites boues le long d'un trajet donné (128) s'étendant entre une conduite d'entrée (102) et une chambre de décharge (104) de ladite chambre (103) ; ledit élément hélicoïdal (106) étant dimensionné de façon à présenter un diamètre qui s'approche du diamètre interne de ladite chambre (103) ; ledit arbre (105) présentant une première partie coaxiale sensiblement conique (108) avec un diamètre qui augmente le long dudit trajet (128) ;
ladite chambre (103) présentant une pluralité d'éléments cylindriques (114) disposés en série et présentant une capacité de filtration donnée respective ;
chaque élément individuel (114) comprenant une pluralité de barres (111) disposées de façon sensiblement parallèle à un axe (139) de rotation dudit arbre (105), avec une section transversale (115) de forme donnée, positionnées le long du périmètre de ladite chambre (103), sensiblement parallèlement les unes aux autres à la manière d'un peigne à une distance mutuelle de dimension donnée (112) ; **caractérisé par le fait que** chaque paire desdites barres adjacentes (111) délimite une ouverture (113) avec une forme allongée et une section transversale sensiblement trapézoïdale, de façon à sensiblement reproduire un tube de Venturi, pour intégrer une pluralité de deuxièmes postes de filtration (126) et pour favoriser une accélération de la phase liquide sortant de chaque élément (114) et, par conséquent, de la chambre (103), et la séparation mutuelle des substances de densité différente, afin d'augmenter la quantité de substances solides contenues par unité de volume dans ladite chambre (103).

2. Séparateur selon la revendication 1, **caractérisé par le fait que** lesdits éléments cylindriques (114) sont disposés en succession le long dudit trajet (128) de telle sorte que ladite dimension donnée (112) diminue en segments le long dudit trajet (128).

3. Séparateur selon l'une des revendications 1 et 2, **caractérisé par le fait que** ledit élément hélicoïdal (106) comprend sa propre hélice (123) dont le pas (127) diminue de façon continue le long dudit trajet (128) pour comprimer lesdites boues de façon croissante le long dudit trajet (128) afin d'augmenter la quantité de substances solides contenues dans lesdites boues par unité de volume.

4. Séparateur selon les revendications 1 à 3, **caractérisé par le fait que** la chambre (103) comprend au moins cinq éléments de filtration cylindriques distincts (114).

5. Séparateur selon les revendications 1 à 4, **caractérisé par le fait que** lesdites barres (11) sont sensiblement rectilignes.

6. Séparateur selon l'une quelconque des revendications précédentes, **caractérisé par le fait qu'**il comprend un troisième poste de filtration (135) positionné en amont de ladite chambre (103) le long dudit trajet (128), ledit poste comportant ladite conduite d'entrée (102) ; ladite conduite d'entrée (102) comprenant une partie (117) avec une forme conique avec une section transversale diminuant dans la même direction que ledit trajet (128) et, par conséquent, vers ledit élément hélicoïdal (106), de façon à sensiblement reproduire un tube de Venturi, afin de favoriser une accélération des boues entrant dans ladite chambre (103) et la séparation mutuelle des substances de densité différente, afin d'augmenter la quantité de substances solides contenues par unité de volume dans ladite chambre (103).

7. Séparateur selon l'une quelconque des revendications précédentes, **caractérisé par le fait qu'**il comprend un quatrième poste de filtration (136) comportant une membrane (119) positionnée en aval de ladite chambre (103) le long dudit trajet (128), afin de favoriser une compression supplémentaire des boues sortant de ladite chambre de décharge (104) et une séparation mutuelle supplémentaire des substances de densité différente pour augmenter la quantité de substances solides contenues par unité de volume.

8. Séparateur selon la revendication 7, **caractérisé par le fait que** ladite membrane (119) comprend un trou cylindrique (121) coaxial audit axe (139) pour permettre à ladite membrane (119) d'adhérer à une seconde partie cylindrique (107) dudit arbre (105) ; et une pluralité d'encoches radiales (122) centrées sur ledit axe (139), élastiquement déformables par suite de la compression desdites boues contre ladite membrane (119) ; à travers la pluralité d'encoches (122), lesdites boues sont poussées dans ladite chambre de décharge (104).

9. Séparateur selon l'une quelconque des revendications précédentes, **caractérisé par le fait qu'**au moins un premier élément de joint d'étanchéité souple (124) est associé audit élément hélicoïdal (106) sur une face supérieure (129) de ladite hélice respective (123) ; ledit premier élément de joint d'étanchéité souple (124) étant approprié pour assurer un contact coulissant avec une surface interne sensiblement cylindrique (125) de ladite chambre (103), afin d'obtenir une étanchéité hydraulique et d'empêcher lesdites boues comprimées de se déplacer en retour le long dudit trajet (128).

10. Séparateur selon les revendications 1 à 9, **caractérisé par le fait que** ladite section transversale (115) présente sensiblement la forme d'un trapèze isocèle, avec la base plus grande (116) sur ladite surface (125) de ladite chambre (103).

11. Séparateur selon l'une quelconque des revendications précédentes, **caractérisé par le fait que** ledit transporteur à vis (101) comporte un actionneur rotatif (141), porté à l'extérieur de ladite chambre (103) pour faire tourner axialement ledit élément hélicoïdal (106).

12. Séparateur selon la revendication 13, **caractérisé par le fait que** ledit actionneur rotatif (141) est relié audit élément hélicoïdal (106) de façon sélectivement libérable.

13. Séparateur selon la revendication 11 ou 12, **caractérisé par le fait que** ledit actionneur rotatif (141) est relié mécaniquement audit élément hélicoïdal (106) au niveau de sa propre partie supérieure (142) par l'intermédiaire d'un réducteur (143).
